# EUROPEAN PATENT SPECIFICATION

(11) **EP 0 711 332 B1**
(45) Date of publication and mention of the grant of the patent: **29.12.1999**
(21) Application number: 94922597.3
(22) Date of filing: 20.07.1994
(51) Int. Cl.: C10M 107/34, C08G 65/20, C08G 65/32

(54) **LUBRICANT BASE FLUID**
BASISFLUIDUM FÜR SCHMIERMITTEL
FLUIDE DE BASE POUR LUBRIFIANT

(30) Priority: 26.07.1993 US 96248
(43) Date of publication of application: 15.05.1996
(73) Proprietor: MOBIL OIL CORPORATION, Fairfax, Virginia 22037-0001 (US)
(72) Inventor: HORODYSKY, Andrew, Gene, Cherry Hill, NJ 08003 (US); JACKSON, Andrew, Pennington, NJ 08534 (US); LAW, Derek, Alwyn, Yardley, PA 19067 (US); MURPHY, William, Russell, Mullica Hill, NJ 08062 (US); PELULLO, Linda, Marie, Clementon, NJ 08021 (US); WEI, Liwen, Belle Mead, NJ 08502 (US)
(74) Representative: Jones, Helen Marjorie Meredith
(86) International application number: US9408044
(87) International publication number: WO9503379

(56) References cited:
- BE-A- 651 607
- DE-C- 914 438
- US-A- 3 425 999
- US-A- 4 153 786
- US-A- 4 481 123
- US-A- 5 035 821
- US-A- 5 248 431

## Description

This invention relates to an aliphatic ester end-capped polyether. More specifically, it concerns a reaction product of a reactive end-group tetrahydrofuran-based polymer or copolymer and an aliphatic carbonyl carbon-containing compound. The reaction product is a base fluid for a lubricant, particularly a base fluid for a worm gear lubricant.

Lubricants for worm gears must be resistant to conditions of high friction and high temperatures in order to achieve high efficiency and low wear during prolonged gear operation. A "worm" drives the "worm gear" by rotating like a screw against the gear. High sliding velocity is developed between the contacting surfaces of the worm and the gear. Thus, the lubricant must be able to reduce a substantial amount of friction and withstand high temperatures.

Polyglycols are known for their friction, wear and heat reducing properties and have been proposed as base fluids for worm gears in Klamann, Lubricants and Related Products, pp. 288 (1984). Polyglycols can be prepared from polymers of alkylene oxides such as propylene oxide or alkylene oxide copolymers (i.e. copolymers of propylene and ethylene oxides). Polypropylene glycol, prepared from propylene oxide, has been described as a lubricant for industrial and automotive applications. See Kirk-Othmer, Encyclopedia of Chemical Technology, Vol. 14, pp. 498-499.

Water-soluble ethylene oxide and propylene oxide-derived polyglycols are known for purposes of making worm gear lubricant base fluids. Although they offer high gear efficiency and other performance advantages, their water solubility gives rise to oil compatibility problems as well as problems of water-induced rust and corrosion.

Polyglycols can also be made from tetrahydrofuran polymers and copolymers as described in Kirk-Othmer Encyclopedia of Chemical Technology, Vol. 18, pp. 660 to 661. Low molecular weight (i.e. 150 to 500 MW) versions of tetrahydrofuran polyglycols are typically used as starting materials. They are highly volatile and not appropriate for lubricant applications. The higher molecular weight tetrahydrofuran (i.e. 600 to 3,000 MW) polyglycols crystallize readily at or below room temperature to produce waxy solids or sticky viscous fluids and are inappropriate for lubricant use.

Copolymers of tetrahydrofuran and alkylene oxides, i.e. propylene oxides, have been proposed to modify the properties of the tetrahydrofuran polymer. Those copolymers of low molecular weight (i.e. about 500 to 2,000 MW) can have lubricating properties. See Kirk-Othmer, Encylcopedia of Chemical Technology, Vol. 18 at page 658-659.

A study of the coefficient of traction reported that tetrahydrofuran-ethylene oxide and propylene oxide polyethers resulted in a low coefficient of traction which indicates effective friction-reducing characteristics. "The Influence of Molecular Structure on Frictional Behavior of Lubricating Fluids 2: Low Coefficients of Traction", Journal of Synthetic Lubrication, Vol. 2, No. 3, p.p. 239-253 (1985).

U.S. Patent No. 4,153,786 describes a one-pot process of making ester end-capped copolyether glycols. The disclosed ester end-capped copolyether glycols are made via an acylium ion precursor (a carboxylic acid anhydride or an acyl halide) which acts as an initiator, a chain transfer agent and a terminator during polymerization to produce esterified products. For instance, the chain transfer agent transfers the growing tip of the forming polymer chain to a new chain in order to achieve average molecular weights in the required range. The reaction products are described as useful intermediates in the manufacture of polyurethanes.

We found that by controlling the degree of ester endcapping and the molecular weight of an ester end-capped polymer or copolymer of tetrahydrofuran we achieved an oil compatible hydrophobic fluid which is useful as a lubricant, particularly a worm gear lubricant. The invention is directed to a reaction product of a tetrahydrofuran-containing polymer or copolymer and an aliphatic carbonyl carbon-containing compound combined in a mole ratio effective for producing a fluid having lubricant properties.

The reaction product demonstrated low traction properties, oxidative stability under high temperatures and good oil compatibility. These properties are attributed to the linear polymeric backbone structure, the degree of ester end-capped groups and the high carbon to oxygen ratio of the polymer. The properties of the reaction product have demonstrated utility as base fluids for lubricant compositions, particularly worm gear lubricant compositions.

This invention presents an improvement over alkylene oxide polyglycols and uncapped tetrahydrofuran-based polymers used as lubricant basestocks, particularly in reducing shear stress. The fluid of this invention is expected to achieve a reduction in shear stress of at least about 10%.

A base fluid reaction product of a tetrahydrofuran-containing polymer or copolymer and an aliphatic carbonyl carbon-containing compound has been found to possess properties which result in high gear efficiency in worm gear lubricant formulations.

The tetrahydrofuran (THF) polymer or copolymer is produced in the conventional manner by reacting a plurality of tetrahydrofuran molecules alone to make a homopolymer, or in combination with at least one alkylene oxide to make a copolymer, in the presence of a suitable acid catalyst which facilitates the formation of an oxonium ion necessary for chain propagation. The polymerization mechanism is described in Dreyfuss et al., "Epoxides and Higher Epoxides", pp. 128-129.

Alkylene oxides which can be used in the THF copolymerization process are represented by 1,2-alkylene oxides or 1,3-alkylene oxides, 1,4-alkylene oxides or cyclic acetals and the like which can contain one or more hydrocarbon substituent groups, depending upon the preferred molecular weight of the final product. Representative examples of suitable alkylene oxides include 1,2-propylene oxide, 1,3-butylene oxide, long chain 1,2-epoxides and 1,4- substituted tetrahydrofuran. Alkylene oxides with hydrocarbon substituents may be utilized when a degree of branching on the copolymer backbone is desired. For purposes of low traction properties, minimal branching along the copolymer backbone is preferred, although short chain branching, i.e. methyl, ethyl and propyl groups along the backbone, are not expected to be detrimental and may impart desirable viscosity/physical properties to the final product. This polymer can also be a block polymer, i.e., a high polymer, made up of sections of THF separated by low molecular weight sections of alkylene oxide from 1,2-ethylene oxide, 1,3-propylene oxides or combinations of alkylene oxides.

Suitable polymerization catalysts include compounds capable of generating tertiary oxonium ions such as super acid initiators, represented by ROSO₂CF₃ and ROSO₂F, strong acid initiators such as ClSO₃H, CF₃SO₃H, HOSO₂F or HPF₆ and other compounds such as BF₃, AgClO₄, NOPF₆. Although there are many methods for making the products of this invention, we specifically contemplate phase transfer catalysis in which the phase transfer agent transfers product from a reaction phase to a different phase thereby ensuring the desired partially esterified product and completion of the conversion.

The conditions of polymerization will be understood by those of ordinary skill in the art. Typically, however, the temperatures of reaction range from -20°C to about 80°C, preferably from 0°C to 40°C. The reaction is preferably carried out in an inert atmosphere which excludes moisture and oxygen. A solvent is not necessary but can be included to facilitate the course of reaction. An example of a suitable solvent is CH₂Cl₂.

The final THF polymer or copolymer should be of a relatively high molecular weight, based on average molecular weight. The molecular weight of the polymer should be at least about 250, preferably about 800, more preferably about 1,000, ranging from about 800 to 4,000, preferably about 1,000 to 3,000 and no more than about 4,000 preferably about 3,000.

Polymerization is terminated by the addition of a nucleophilic reagent. Water is a preferred nucleophilic reagent which introduces the hydroxyl end-group to produce a polyglycol ether. The molecular weight of the final product is achieved by controlling the amount of the polymerization.

The proportion of THF to alkylene oxide in the final polymerization product depends upon the preferred oxygen to carbon ratio of the polyether backbone. We found that a high carbon-to-oxygen mole ratio is important for purposes of effective lubricant performance. The mole ratio of carbon to oxygen should be at least 2 to 1, preferably about 4 to 1 and even more preferably 10 to 1.

After polymerization is complete and the desired molecular weight is achieved, the polymer is treated with a carbonyl-carbon containing compound for purposes of producing the aliphatic ester product. The amount of carbonyl-carbon containing compound that can be used ranges from 0.5 equivalent to 1 equivalent (relative to the molar amount of OH group in the polymer), preferably ranging from 0.3 to 1 and even more preferably from 0.1 to 1. This proportion is important for purposes of achieving a partially esterified product which we have found to demonstrate superior lubricant properties, particularly, low traction and low temperature properties. The carbonyl-carbon containing compound is aliphatic for purposes of imparting desired lubricant properties such as enhanced thermal/oxidative stability, low temperature fluidity and the necessary degree of hydrophobicity for solubility in organic materials, i.e. organic materials including mineral, hydrocracked and synthetic lubricating oils. This is an important aspect of the invention since in the absence of the aliphatic ester group, a THF polymer or copolymer of the described molecular weight is a solid waxy material or a sticky viscous fluid which is useless for purposes of gear lubrication and does not possess the necessary thermal and oxidative stability.

The carbonyl carbon containing compound is represented by the following structural formula: 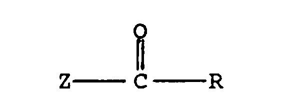 where Z is a halogen group, hydroxy group, acetyl group or anhydride group which can generate the acyl species. Halogen groups include chlorine, fluorine, bromine and iodine, and R is a hydrocarbyl group ranging from about 1 to 30 carbon atoms, preferably at least about 4, even more preferably from about 6 to 25 carbon atoms and more preferably from 8 to 20 carbon atoms. The hydrocarbon group is aliphatic and it can be straight chain or branched chain, depending upon the desired final product properties. A certain degree of branching of the hydrocarbon group is sometimes preferred. The degree of branching can range from about 10 to 100%, specifically, from 40 to 100% and even more specifically from 40 to 90%. Optionally, R contains one or more oxygen, sulfur or nitrogen atoms.

There is a competition between a final product molecule which is essentially linear in structure and a product molecule which is somewhat branched because a linear molecule has properties necessary for a low traction fluid, while a branched molecule has better low temperature properties and, therefore, more resistant to oxidative degradation. We found that slight branching imparted by a C₄ to C₃₀ hydrocarbon substituted carbonyl compound in which the hydrocarbon substituent contains at least one, no more than four short chain aliphatic groups such as methyl, ethyl, propyl or butyl offers a good balance between the competing low traction properties of the linear molecule and the oxidative and thermal stability properties of the branched molecule.

Suitable carbonyl containing compounds of this description include 2,2-dimethyl pentanoic, ethylhexanoic, neodecanoic, pivalic compounds, and the like.

The THF polymer or copolymer and the carbonyl carbon containing compound are combined in a mole ratio of polymer to carbonyl compound of about 1:1 to 1:2, a ratio of 1:1 is used when it is desirable to achieve a 50% esterified product.

The reactants are combined in an alkaline solution in an inert atmosphere, atmospheric pressure and temperatures ranging from room temperature to 100°C, preferably from 25°C to 50°C. The product is extracted with an organic solvent such as methylene chloride or toluene.

The reaction is demonstrated by the following mechanism. For example only, the polymer shown below is a THF homopolymer; however, as disclosed in the foregoing specification, the polymer can be a copolymer of THF and an alkylene oxide. 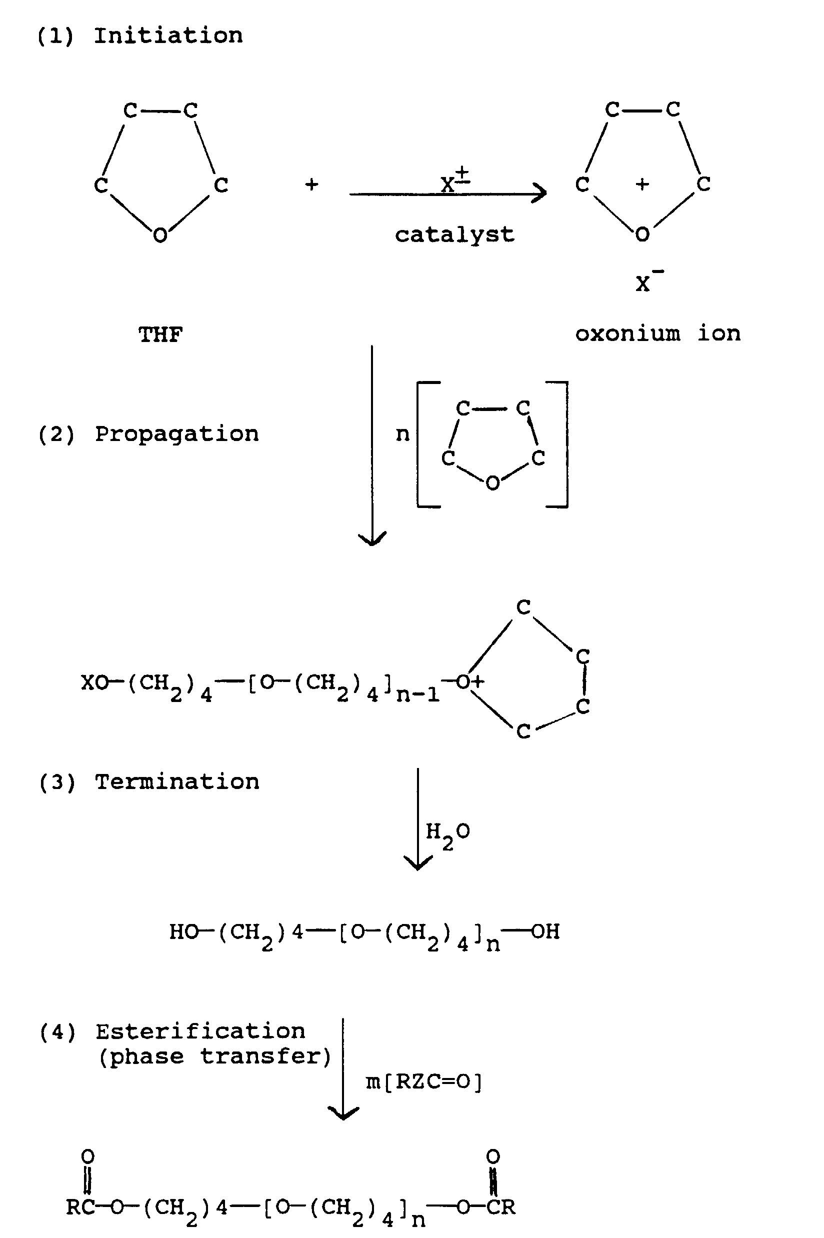 where m is an integer ranging from about 0.2 to 2, preferably from 0.6 to 2, even more preferably from 0.8 to 1.8, R is a hydrocarbon group as described above, n is an integer ranging from 1 to 55, preferably 4 to 40, X is hydrogen or stable counter cation such as PF₆⁻ , AsF₆⁻ , SbF₆⁻, SbCl₆⁻ , BF₄⁻ , SO₃CF₃⁻ ,SO₃F⁻ and C10₄⁻ , Z represents a halogen, hydroxyl, acetyl, anhydride or other acyl generating species. Polymerization occurs through cationic ring-opening addition. The polymer is terminated through reaction with water, once the necessary molecular weight is achieved.

The reaction products are base fluids for lubricant oil formulations. From the properties of the reaction products which were discovered, they are most effective in worm gear oil formulations. However, it is expected that they will be useful as base fluids for heat transfer fluids, metal cutting fluids, industrial and engine lubricant formulations, circulation oils and industrial gear oils.

To make the final formulation the reaction product is blended with a typical worm gear oil additive package containing other additives such as sulfates, phenates, polymeric succinimides, dithiophosphates, hindered phenols, arylamines, heterocycles, sulfurized olefins, etc. The amounts of other additives may be reduced due to the performance advantage of the reaction products of this invention. This amounts to a substantial economic savings.

The reaction product can be blended with another lubricant base fluid such as a mineral oil-derived hydrocarbon fluid (i.e. a polyalpha olefin, a dewaxed oil or a hydrocracked oil) and/or a synthetic fluid such as an ether fluid, a hydrocarbon fluid or a polyglycol. Blended lubricant base fluids can be made by blending in a proportion of about 10 to 50 wt.% of the instant reaction product with about 50 to 90 wt.% of another lubricant of the blend described above.

### Example 1

130 g 2-ethylhexanoyl chloride (0.8 mole) were added dropwise into a 100 g mixture of tetrahydrofuran polymers (250 molecular weight, 0.4 mole) and 120 g 60% aqueous potassium hydroxide solution. The mixture was stirred while the temperature was maintained at 40°C and atmospheric pressure under a nitrogen atmosphere for four hours. The temperature of the reaction was maintained by cooling the reaction mixture in an ice bath, as needed. The mixture was maintained at room temperature overnight with stirring. The product oil layer was extracted with methylene chloride, separated and stripped (120 °C/7kPa (1 torr)). The resulting product was an oily liquid which contained ester and ether groups as determined by molecular weight determination and NMR analysis.

### Example 2

The procedure of Example 1 was followed except that 500 g tetrahydrofuran-ethylene oxide copolymer (1250 molecular weight, 0.4 mol) was used instead of the tetrahydrofuran polymer.

### Example 3

The procedure of Example 2 was followed except that 0.72 mole of ethylhexanoyl chloride (115 g) was used.

### Evaluation of the Product

The reaction products of the foregoing examples were tested for their ability to reduce shear stress, oil compatibility and their thermal/oxidative stability.

### Shear Stress Reduction

Shear stress reduction was measured with an optical traction rig by determining the shear stress responses to a contact stress of 896,000 kPa (130,000 psi) at 30°C. In this test a neat base oil was fed into a ball-on-plate traction rig consisting of a rotating stainless steel disc and rolling balls in a configuration described in Hentschel, "The Influence of Molecular Structure on the Frictional Behavior of Lubricating Fluids 2: Low Coefficients of Traction", J. Synthetic Lubrication, Vol. 2, No. 3, pp. 250-253 (1985).

The results of the test using the product of Examples 1 and 2 are reported in Table 1. Table 1 also presents the results employing a commercial copolymer of ethylene oxide and propylene oxide of 4,000 MW.

**TABLE 1**

| **Shear Strength Comparison** | | |
|---|---|---|
| | Maximum Shear Stress, psi | % Reduction of Shear Stress |
| Example 1 | 4126 | 13% |
| Example 2 | 3383 | 28% |
| Commercial Ethylene Oxide and Propylene Oxide Polyglycols | 4720 | 0% |

Comparing the results reported in Table 1, the products of the invention exhibited low maximum shear stress which indicates low traction characteristics. This is expected to be reflected in improvements in gear efficiency.

### Oil Compatibility

The hydrophobicity of the products of Examples 1 and 2 was tested by blending the products of the Examples with water in a 1:1 mole ratio of water to base oil and observing their water solubility at room temperature about 20°C. A commercial copolymer of ethylene oxide and propylene oxide of 4,000 MW was also included in the test. The results are reported in Table 2.

**TABLE 2**

| **Oil Compatibility Comparison (Room Temperature, 1:1 Water:Oil)** | |
|---|---|
| Example 1 | Two phases |
| Example 2 | Two phases |
| Commercial Ethylene Oxide and Propylene Oxide Polyglycols | One phase |

Comparing the results reported in Table 2, the products of the the invention were not water soluble indicating compatibility with oil while the commercial alkylene oxide copolymer was completely water soluble.

### Thermal/Oxidative Stability

The thermal/oxidative stability of the product of Example 1 was tested in the Differential Scanning Calorimetry test. In this test, neat base oil was placed in an aluminum pan and heated from 80°C at the rate of 5°C/minute to 350°C under 3500 kPa (500 psi) oxygen pressure. The induction temperature was measured at the temperature when the base oil began to decompose. The performance results of a tetrahydrofuran polyglycol were also included in the test.

**TABLE 3**

| **Differential Scanning Calorimetry (80°C @ 5°C/min @ 350°C, 3500 kPa (500 psi) oxygen)** | |
|---|---|
| | Induction Temperature (°C) |
| Example 2 | 140 |
| Uncapped Tetrahydrofuran Based Polyglycols | 129 |

Comparing the results reported in Table 3, the products of the invention exhibit significantly better thermal/oxidative stability in comparison to the THF polymer.

## Claims

1. A process for making a lubricant base fluid comprising the steps of:
(a) forming a tetrahydrofuran polymer or copolymer from a reaction mixture comprising tetrahydrofuran and a catalyst capable of generating a tertiary oxonium ion;
(b) maintaining the reaction mixture under conditions of temperature and pressure suitable for polymerization;
(c) forming a polymer or copolymer with hydroxyl groups as end groups by terminating step (b) by adding a nucleophilic reagent to the reaction mixture when the polymer achieves a molecular weight, based on the average molecular weight, of at least 250 to 4,000; and
(d) reacting the polymer or copolymer of step (c) with a carbonyl carbon-containing compound having the following structural formula: 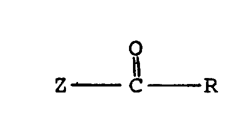 in which Z is a halogen selected from chlorine, fluorine, bromine and iodine and R is a hydrocarbyl group ranging from 1 to 30 carbon atoms, the polymer being treated with an amount of carbonyl carbon-containing compound ranging from 0.5 equivalent to 1 equivalent, relative to the molar amount of the hydroxyl group of the polymer.

2. The process of claim 1 in which the reaction mixture of step (a) further comprises an alkylene oxide.

3. The process of claim 2 in which the alkylene oxide is ethylene oxide.

4. The process of claim 2 in which the carbonyl carbon-containing compound is ethylhexanoyl halide.

5. The process of claim 4 in which the ethylhexanoyl halide is 2-ethylhexanoyl chloride.

6. The process of claim 1 which further comprises blending from 10 to 50 wt.% of the reacted polymer or copolymer of step (d) with a lubricant base fluid selected from a mineral oil-derived hydrocarbon fluid, ether, synthetic hydrocarbon or polyglycol in an amount ranging from 50 to 90 wt.%

## Patentansprüche

1. Verfahren zur Herstellung eines Schmiermittel-Basisfluids, welches die Schritte umfaßt:
(a) Erzeugen eines Tetrahydrofuran-Polymers oder -Copolymers aus einer Reaktionsmischung, die Tetrahydrofuran und einen Katalysator umfaßt, der ein tertiäres Oxoniumion erzeugen kann,
(b) Halten der Reaktionsmischung bei für die Polymerisation geeigneten Bedingungen von Temperatur und Druck,
(c) Erzeugen eines Polymers oder Copolymers mit Hydroxylgruppen als Endgruppen durch Beenden des Schritts (b) durch Zugabe eines nukleophilen Reagenz zu der Reaktionsmischung, wenn das Polymer ein auf das mittlere Molekulargewicht bezogenes Molekulargewicht von mindestens 250 bis 4.000 erreicht, und
(d) Reaktion des Polymers oder Copolymers vom Schritt (c) mit einer Carbonylkohlenstoff enthaltenden Verbindung mit folgender Strukturformel: 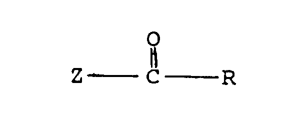 worin Z ein Halogen, ausgewählt aus Chlor, Fluor, Brom und Iod, ist und R eine Hydrocarbylgruppe im Bereich von 1 bis 30 Kohlenstoffatomen ist, wobei das Polymer mit einer Menge der Carbonylkohlenstoff enthaltenden Verbindung im Bereich von 0,5 bis 1 Äquivalent, bezogen auf die molare Menge der Hydroxylgruppe des Polymers, behandelt wird.

2. Verfahren nach Anspruch 1, wobei die Reaktionsmischung vom Schritt (a) außerdem Alkylenoxid umfaßt.

3. Verfahren nach Anspruch 2, wobei das Alkylenoxid Ethylenoxid ist.

4. Verfahren nach Anspruch 2, wobei die Carbonylkohlenstoff enthaltende Verbindung Ethylhexanoylhalogenid ist.

5. Verfahren nach Anspruch 4, wobei das Ethylhexanoylhalogenid 2-Ethylhexanoylchlorid ist.

6. Verfahren nach Anspruch 1, das außerdem das Mischen von 10 bis 50 Gew.-% des reagierten Polymers oder Copolymers vom Schritt (d) mit einem Schmiermittel-Basisfluid, ausgewählt aus einem von Mineralöl stammenden Kohlenwasserstofffluid, Ether, synthetischem Kohlenwasserstoff oder Polyglycol, in einer Menge im Bereich von 50 bis 90 Gew.-% umfaßt.

## Revendications

1. Un procédé de préparation d'un fluide de base pour lubrifiant comprenant les étapes suivantes :
(a) on forme un polymère ou copolymère de tétrahydrofuranne à partir d'un mélange réactionnel comprenant du tétrahydrofuranne et un catalyseur capable de libérer un ion oxonium tertiaire :
(b) on maintient le mélange réactionnel dans les conditions de température et de pression convenant à la polymérisation ;
(c) on forme un polymère ou copolymère comprenant des groupes hydroxyles comme groupes terminaux en terminant l'étape (b) par l'addition d'un réactif nucléophile au mélange réactionnel lorsque le polymère atteint un poids moléculaire (exprimé en poids moléculaire moyen), d'au moins 250 à 4 000 ; et
(d) on fait réagir le polymère ou le copolymère de l'étape (c) avec un dérivé contenant du carbone carbonylé présentant la formule développée suivante : 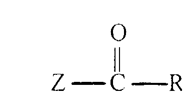 dans laquelle Z est un halogène choisi parmi chlore, fluor, brome et iode et R est un groupe hydrocarbyle renfermant de 1 à 30 atomes de carbone, le polymère étant traité par une quantité de dérivés contenant du carbone carbonylé comprise entre 0,5 équivalent et 1 équivalent par rapport à la quantité molaire de groupes hydroxyles du polymère.

2. Le procédé selon la revendication 1, dans lequel le mélange réactionnel de l'étape (a) comprend en outre un alkylène oxyde.

3. Le procédé selon la revendication 2, dans lequel l'alkylène oxyde est un oxyde d'éthylène.

4. Le procédé selon la revendication 2, dans lequel le dérivé carboné carbonylé est un halogénure d'éthylhexanoyle.

5. Le procédé selon la revendication 4 dans lequel l'halogénure d'éthylhexanoyle est le chlorure de 2-éthylhexanoyle.

6. Le procédé selon la revendication 1 qui comprend en outre le mélange de 10 à 50 % du polymère ou copolymère ayant réagi de l'étape (d) avec un fluide de base lubrifiante choisi parmi un fluide hydrocarboné choisi parmi huile minérale, éther, hydrocarbure synthétique ou polyglycol, en quantité comprise entre 50 et 90 % en poids.
